# EUROPEAN PATENT SPECIFICATION

(11) **EP 3 476 629 B1**
(45) Date of publication and mention of the grant of the patent: **25.11.2020**
(21) Application number: 18290126.4
(22) Date of filing: 29.10.2018
(51) Int. Cl.: B60D 1/155, F16L 37/113

(54) **LOCKING DEVICE FOR TELESCOPIC TOW BAR FOR VEHICLE AND TELESCOPIC TOW BAR COMPRISING SUCH DEVICE**
VERRIEGELUNGSVORRICHTUNG FÜR TELESKOPISCHE ZUGSTANGE FÜR FAHRZEUG UND TELESKOPISCHE ZUGSTANGE MIT SOLCH EINER VORRICHTUNG
DISPOSITIF DE VERROUILLAGE POUR UNE BARRE DE REMORQUAGE TÉLESCOPIQUE DE VÉHICULE ET BARRE DE REMORQUAGE TÉLESCOPIQUE COMPRENANT UN TEL DISPOSITIF

(30) Priority: 30.10.2017 FR 1701128
(43) Date of publication of application: 01.05.2019
(73) Proprietor: NEXTER Systems, 42300 Roanne (FR)
(72) Inventor: Larue, Thomas, 18023 Bourges (FR)
(74) Representative: Cabinet Chaillot

(56) References cited:
- DE-A1- 1 655 092
- DE-U1- 29 921 551
- US-A1- 2009 097 926

## Description

The present invention relates to the field of towing and repairing vehicles, and more particularly to a locking device for a telescopic tow bar and to a telescopic tow bar comprising such locking device.

For towing a disabled vehicle, different types of tow bars are suggested, the tow bar being mainly formed by a rigid member provided, at each of the ends thereof, with gripping means that are to be fitted on hooking means provided on the towing vehicle and the disabled vehicle which has to be towed.

There are mainly three types of tow bars with different lengths, namely the foldable bar, the telescopic bar and the standard bar.

The telescopic bar has the advantage of allowing to set the length of the bar according to the needs.

Telescopic tow bars which are automatically controlled are known. Such bars can be of various structures, for example, mechanical telescopic tubes, an extension of fifth-wheel couplings, an hydraulic operation using sensors, and, furthermore, multiple-hitch systems.

However, these telescopic tow bars are expensive and have a high weight, their maintenance is expensive and many of these bars are not suitable for normal trailers.

Manually manoeuverable telescopic tow bars, which can be blocked in any desired position using a clamping sleeve or a bolt securing device, are also known. However, such bolt securing requires a telescopic tube free from any clearance, which, in case of inadequate maintenance, is likely to be corroded.

There are also U.S. patents US7942435 and US7390007 which disclose towing means comprising two telescopic bars hinged and assembled in the shape of a triangle. Towing should be possible only when these bars are in their maximum extension position, in order to ensure the distances between vehicles required for the safety of the operation. It is common, in these devices, to implement locking means comprising one or several locks that are radially movable against one of the bars in order to block it. Locking is often performed automatically, the lock being pushed by a spring.

One of the problems associated with the known solutions is that the locks form localised points at which the tensile loads are transmitted. It results in peening or deformations of the locks, which can cause the bars to be wedged, preventing their subsequent folding.

Another problem is that it is difficult to remotely determine whether or not the lock is in place, thus whether the bars are effectively locked. It is thus possible to begin towing with one or two bars which is/are not correctly locked, which can lead to a break or a towing incident.

Therefore, the invention aims to provide a locking device for telescopic tow bar which can allow reliable locking in the maximum extension position, while suppressing the risk that the bars become wedged and, preferably, automatic locking and also allowing an easy control of the locked or unlocked state of the device from outside.

German patent DE1655092 A1 discloses a locking device as defined in the preamble of claim 1.

The present invention relates to a locking device for a telescopic tow bar, which tow bar comprises a cylindrical rod slidably mounted in a cylindrical tube, the locking device comprising a first locking part carried or intended to be carried by the rod and a second locking part carried or intended to be carried by the tube, the first and second locking parts being able to cooperate with each other to prevent any relative axial translation movement between the tube and the rod when the rod is in a maximum extension position out of the tube, the locking device being characterised in that:
- the first locking part has a radially outer side which is provided with first and second series of first tabs located along first and second circumferences of the first locking part, respectively, two successive first tabs of a same series being separated by a slot, the first and second series of first tabs being separated, in the axial direction, by a circumferential groove, and
- the second locking part comprises:
   - a crown having a radially inner side which comprises a series of second tabs located along a circumference of the crown, two successive second tabs of a same series being separated by a slot, the second tabs having a length, in the axial direction, at most equal to the width of the groove of the first locking part, and
   - mounting means for mounting the crown on the tube in a rotating manner between a first, so-called locked, angular position and a second, so-called unlocked, angular position,
   the first and second locking parts being sized such that the crown is able, in use, to be positioned around the first locking part with the second tabs of the crown extending in said groove and, according to the angular position of the crown, either each second tab is located between two first tabs of the first locking part, the locking device being then in locked position, or each second tab is located between two slots of the first locking part, the locking device being then in unlocked position;
   the locking device also comprising rotation blocking means for blocking against rotation the first locking part with respect to the mounting means of the second locking part when the crown is positioned around the first locking part with the second tabs of the crown extending in said groove, the rotation blocking means comprising a series of third tabs located along a circumference of a radially inner side of the mounting means of the second locking part, two successive third tabs being separated by a slot, the third tabs being identical in number to the second tabs of the crown and having the same width, in the circumferential direction, whereby, when the crown is positioned around the first locking part with the second tabs of the crown extending in said groove, each first tab of the second series is located in a slot between two third tabs, the first tabs of the second series thus forming also part of the rotation blocking means.

Preferably, the first tabs, the second tabs and, if applicable, the third tabs, are angularly evenly distributed.

The mounting means of the second locking part may comprise a so-called fixed ring intended to be made integral with one end of a tube of a tow bar, the fixed ring having a radially inner side on which, if applicable, the third tabs are located.

The mounting means of the second locking part may also comprise an annular holding end cover, the crown being arranged between the fixed ring and the holding end cover, the holding end cover being connected to the fixed ring using screws extending in holes provided for that purpose and angularly distributed in the fixed ring and the holding end cover, each screw further extending through a respective axial through opening provided in the crown, the openings being oblong and circle arc-shaped so as to allow the crown to rotate.

The locking device may comprise means for restraining the amplitude of rotation of the crown, which, if applicable, may be formed by the screws connecting the holding end cover and the fixed ring and against which the ends of the openings of the crown can abut.

The locking device may further comprise elastic return means for elastically urging the crown towards the locked position, such as springs.

The crown may carry, on its outer surface, protrusions which are angularly distributed and assist the manual control of the rotation of the crown, towards the unlocked position, by a user.

The crown and/or fixed ring can carry a mark on their outer surface, for example, an arrow oriented towards the unlocked position and/or icons to designate the unlocked position and the locked position of the locking device.

The first locking part may be formed by an axial cylindrical tip whose free end comprises a cylindrical part forming a journal with which the tube is coaxial, and whose diameter is substantially equal to the inner diameter of the tube, so as to guide the rod in the tube when approaching its maximum extension position and when departing therefrom.

The present invention also relates to a telescopic tow bar comprising a cylindrical rod slidably mounted in a cylindrical tube, each of the tube and the rod being provided, at a first end, with joining means for joining to a vehicle, such as a towing clevis, the tow bar also comprising a locking device having a first locking part carried by the rod and a second locking part carried by the tube, the first and second locking parts being able to cooperate with each other to prevent any relative axial translation movement between the tube and the rod when the rod is in a maximum extension position out of the tube, the tow bar being characterised in that the locking device is as defined above.

The tow bar may advantageously comprise holding means for holding the locking device in the unlocked position until the rod reaches its maximum extension position, these holding means comprising, preferably, a bar which is carried on the outer surface of the rod, extends on a generatrix of the rod and ends at a first tab of the first series of tabs of the first locking part and, if applicable, a notch which is provided on the radially inner side of the holding end cover and positioned so as to be aligned with one of the slots of the crown when the crown is in unlocked position, such that, during the extension or retraction movement of the rod with respect to the tube, the bar moves in a slot of the crown and, if applicable, in the notch and a slot between two third tabs, the bar thus preventing any rotation of the crown until the rod reaches its maximum extension position.

To better illustrate the object of the present invention, a preferred embodiment will be described below, for illustrating and non-limiting purposes, in reference to the appended drawings.

In these drawings:
- FIG.1 is a perspective view of a region of a telescopic tow bar comprising the locking device according to the present invention;
- FIG.2 is a perspective view of the rod of the telescopic tow bar, provided with the first locking part according to the present invention;
- FIG.3 is an enlarged view of FIG.2, showing the end of the rod provided with the first locking part;
- FIG.4 is a perspective view of the tube of the telescopic tow bar, provided with the second locking part according to the present invention;
- FIG. 5 is a longitudinal sectional view of the end of the tube provided with the second locking part, in the locked position;
- FIG.6 is a perspective view of the end of the tube provided with the second locking part, in the unlocked position;
- FIGS.7 and 8 are longitudinal sectional views of the telescopic tow bar according to the present invention, during the extension of the rod with the locking device in unlocked position, and in the maximum extension position of the rod with the locking device in the locked position, respectively;
- FIG.9 is a front view of the crown; and
- FIG.10 is a front view of the flange.

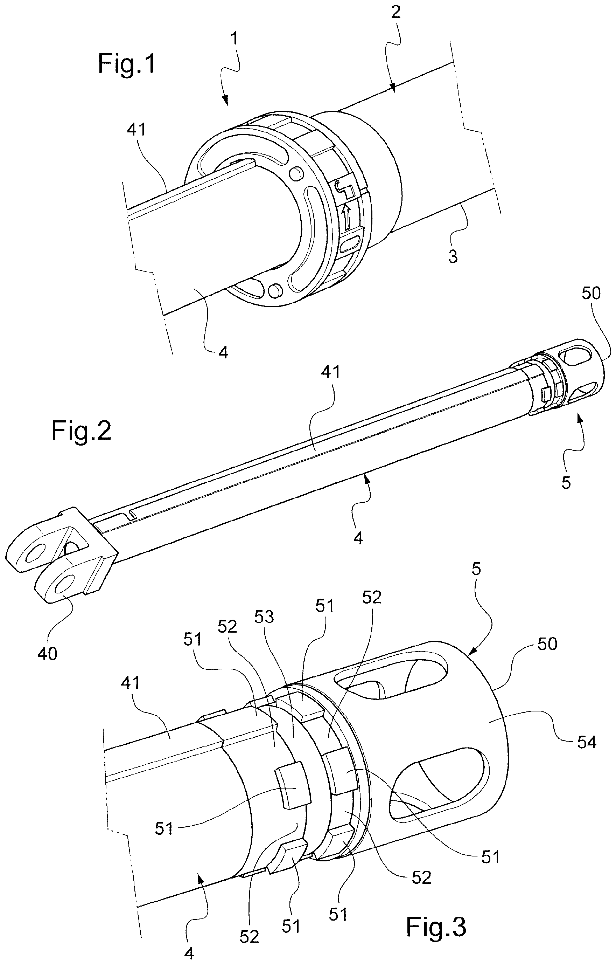

If referring to FIGS.1-8, it can be seen that the locking device 1 according to the present invention is intended to be used for locking and/or unlocking a telescopic tow bar 2.

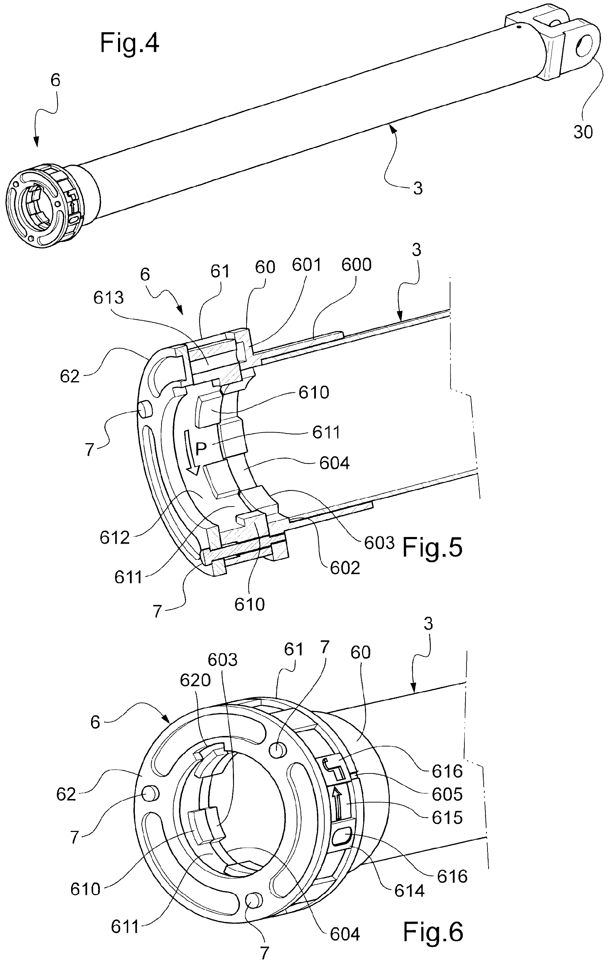

The tow bar 2 according to a particular embodiment of the invention conventionally comprises at least one outer tube 3 intended to be joined to one of a towing vehicle and a towed vehicle, and an inner rod 4 intended to be joined to the other of the towing vehicle and the towed vehicle. The rod 4 has a diameter at least slightly lower than that of the tube 3 and is thus slidably mounted in the latter. As it can be seen in FIG.2, the rod 4 carries a clevis 40 at one of its ends for the connection to a vehicle. The tube 3 carries a clevis 30 at one of its ends for the connection to another vehicle, as it can be seen in FIG.4.

Specifically to the present invention, the rod 4 carries a bar 41 longitudinally extending on the outer surface of the rod 4, on a generatrix of the latter, to the end of the rod 4 opposite to the end carrying the clevis 40.

The locking device 1 according to the present invention allows to lock the rod 4 in position when the latter is in its maximum extension position.

The locking device 1 comprises a first locking part 5 carried by the rod 4 and a second locking part 6 carried by the tube 3, the first and second locking parts 5, 6 being able to cooperate with each other to allow the tube 3 and the rod 4 to be locked or unlocked.

If referring more particularly to FIGS.2 and 3, it can be seen that the first locking part 5 is integral with the end of the inner rod 4 opposite to the end carrying the clevis 40.

The first locking part 5 is in the form of an axial cylindrical tip 50, integrally formed, welded or screwed to the end of the rod 4. The tip 50 is coaxial to the rod 4 and substantially identical in diameter thereto.

The tip 50 comprises, in order from the end of the rod 4, a first series of first tabs 51 angularly evenly distributed along a first circumference of the tip 50 and separated from each other in the circumferential direction by slots 52, a circumferential groove 53, a second series of first tabs 51 angularly evenly distributed along a second circumference of the tip 50 and separated from each other in the circumferential direction by slots 52, and a journal-forming cylindrical piece 54. In other words, the first and second series of first tabs 51 and slots 52 are arranged on either side of the groove 53.

The first tabs 51 all have the same width (size in the circumferential direction) and the same thickness (size in the radial direction). Thus, there is the same number of first tabs 51 and slots 52 on either side of the groove 53. In addition, the bottom surface of the slots 52 is flush with the bottom surface of the groove 53.

One of the first tabs 51 of the first series is in the extension of the bar 41 and continue with the bar 41. The width of the bar 41 is equal to that of the first tabs 51.

If referring now to FIGS.4-6, it can be seen that the second locking part 6 comprises a fixed ring 60, a crown 61 and a holding end cover 62.

The ring 60 is made integral with the end of the tube 3 opposite to the end carrying the clevis 30, for example by welding or screwing. More specifically, the ring 60 comprises a tubular part 600 having, at one end, a flange 601. The tubular part 600 is mounted on said end of the tube 3, the end face thereof abutting against an inner shoulder 602 of the tubular part 600.

As it can be better seen in FIG.5, the flange 601 has a radially inner side on which there is a series of third tabs 603 angularly evenly distributed along the circumference of the flange 601 and separated from each other in the circumferential direction by slots 604. The third tabs 603 all have the same width and the same thickness.

The crown 61 is an annular piece having a radially inner side and a radially outer side, and whose first end face is placed against the end face of the flange 601. The radially inner side of the crown 61 also has a series of second tabs 610 angularly evenly distributed along a circumference of the crown 61 and separated from each other in the circumferential direction by slots 611. The second tabs 610 and the slots 611 are arranged on the flange side 601 and the radially inner side of the crown 61 has also a smooth surface 612 on the holding end cover side 62. The second tabs 610 all have the same width and the same thickness.

The third tabs 603 have the same width as the second tabs 610 and thus there is a same number of tabs 603 and 610. In the example shown, the bottom of the slots 604 is slightly recessed with respect to the bottom of the slots 611, and the thickness of the third tabs 603 is correspondingly higher than that of the second tabs 610, such that the radially inner faces of the tabs 603 and 610 are all carried by a same theoretical cylinder. It can be noted that the radially inner faces of the different tabs mentioned above are all concave along an arc of cylinder.

In addition, the second tabs 610 have a length (size in the axial direction) which is substantially equal to the width (size in the axial direction of the rod 4) of the circumferential groove 53 of the rod 4.

Still in reference to FIG.5, the crown 61 is provided with several axial openings 613 extending from one end face of the crown 61 to the other end face, with being angularly evenly distributed along the circumference of the crown 61. Each opening 613 is an oblong and circle arc-shaped opening.

The crown 61 is held against the flange 601 by the holding end cover 62 which is placed against the second end face of the crown 61.

The holding end cover 62 is also an annular piece thus having an inner side and an outer side. Several holes, here three holes, are provided through the holding end cover 62, with being angularly distributed along the latter. Each of these holes opens onto a respective opening 613 of the crown 61 and is aligned with a respective threaded hole 606 provided in the flange 601, so as to allow the passage of screws 7 allowing to connect the fixed ring 60, the crown 61 and the holding end cover 62 together.

The different pieces will be sized such that the holding end cover 62 does not block against rotation the crown 9, for example by sizing the screws 7 such that a small clearance exists between the fixed ring 60, the crown 61 and the holding end cover 62.

It can be noted that the openings 613, in addition to allowing the passage of the screws 7 and allowing a rotation of the crown 61 around the axis of the tube 3, will abut, by their ends, against the respective screw 7, such that the screws 7 form means for restraining the amplitude of rotation allowed for the crown 61.

The crown 61 is rotatably movable between an unlocked position and a locked position.

In the unlocked position, shown in FIG.6, the tabs 603 and 610 are aligned and the slots 604 and 611 are aligned. One of the slots 611 is also aligned with a notch 620 provided in the radially inner side of the holding end cover 62, and whose width is equal to that of the slots 611.

In the locked position, shown in FIG.5, the tabs 603 and 610 are no longer aligned: each third tab 603 is aligned with a slot 611 and each second tab 610 is aligned with a slot 604.

The rotation of the crown 61 from the locked position to the unlocked position is performed along the arrow P in FIG.5, and against the action of elastic return means, such as tension-compression springs (that is, which may be used in tension and compression) 619 disposed in circular grooves 617 between the fixed ring 60 and the crown 61.

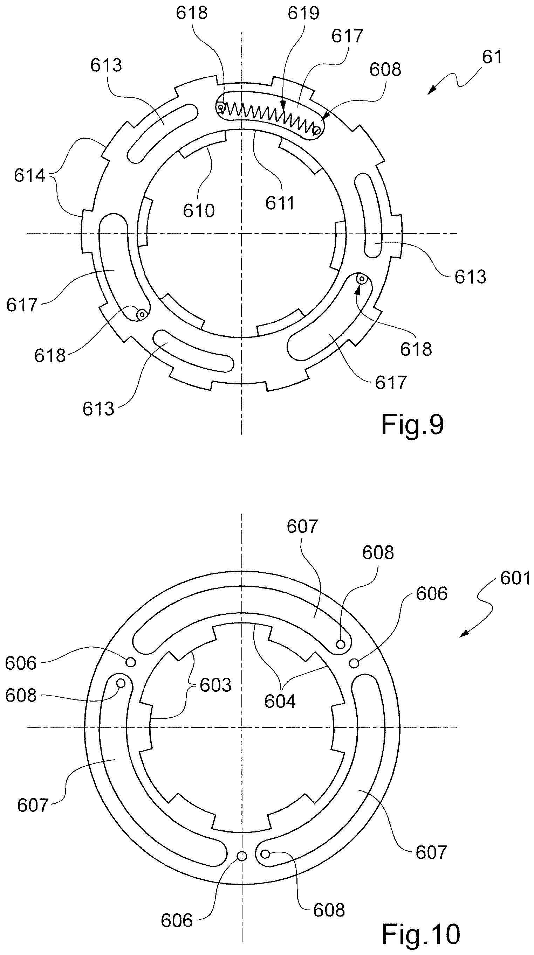

FIG.9 shows the crown 61 in front view. It can be noted that the crown comprises three through grooves 617 which extend from one end face of the crown 61 to the other end face. These grooves 617 are angularly evenly distributed along the circumference of the crown 61 and alternated with the openings 613. Each groove 617 is oblong and circle arc-shaped.

Each groove 617 accommodates a tension-compression spring 619 (only one is shown here). The spring 619 is attached:
- on one hand, to a holed leg 618 which is integral with the crown 61 and located at one end of the groove 617, and
- on the other hand, to a lug 608 integral with the flange 601 of the ring 60.

FIG.10 shows the flange 601 in front view. It can be noted that this flange carries circular grooves 607 alternated with the threaded holes 606 accommodating the screws 7. These grooves are not through grooves. They allow the spring 619 to spread freely out of its groove 617 when pivoting the crown 61.

It would be possible to replace the lugs 608 with holed legs integral with the flange 601.

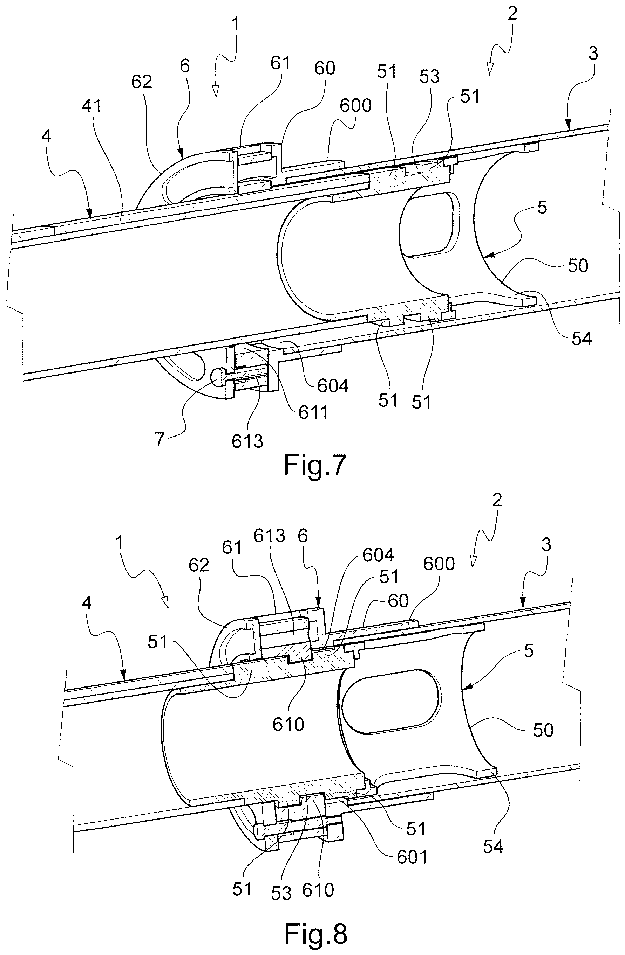

The operation of the locking device 1 will now be described in reference to FIGS.7 and 8.

FIG.7 shows the tow bar 2 during the extension of the rod 4 out of the tube 3. The locking device 1 is in the unlocked position and the bar 41 moves in the notch 620 and the aligned slots 604 and 611. The bar 41 acts as a key and prevents the crown 61 from switching from the unlocked position to the locked position under the action of the elastic return means.

When the rod 4 is in its maximum extension position out of the tube 3, the groove 53 is positioned at the series of second tabs 610 and slots 611. In this position, the crown 61 is no longer blocked against rotation by the bar 41 or the first respective tab 51, and thus switches automatically to the locked position, under the action of the return means. Each second tab 610 of the crown 61 is then positioned between, on one side, a first tab 51 of the first series and, on the other side, a first tab 51 of the second series.

Therefore, the second tabs 610 of the crown 61, which are held in a fixed position, prevent any relative axial movement of the rod 4 with respect to the tube 3: in either direction, the first tabs 51, integral with the rod 4, abut against the fixed second tabs 610 of the crown 61.

It can be noted that the tensile loads are no longer localised at a lock but, on the contrary, are evenly distributed around the axis of the rod 4 and the tube 3 on the different tabs 51 and 610. Therefore, there is no risk that the rod 4 becomes wedged in the tube 3 due to peening or deformations of the locks.

In addition, each third tab 603 of the fixed ring 60 is positioned between two first tabs 51 of the second series of first tabs 51 of the first locking part 5, thereby ensuring an immobilization, against rotation, of the rod 4 with respect to the tube 3. Again, the loads are not localised at one point, but are distributed around the entire circumference, at the surfaces of contact between the tabs 51 and 603.

Thus, it can be noted that the locking device 1 locks the rod 4 against translation and against rotation with respect to the tube 3, in an automatic and reliable manner, and with an excellent distribution of the different loads.

It can be underlined that the diameter and the length of the cylindrical piece 54 of the first locking part 5 are selected so that it forms a journal guiding the rod 4 in the tube 3, namely when approaching to the maximum extension position of the rod 4 or when departing therefrom.

The unlocking control of the locking device 1 is manual. To this end, as it can be seen in FIG.6, the crown 61 carries, on its outer surface, protrusions 614 helping its handling, as well as a mark 615 showing the rotation direction for unlocking. Icons 616 are provided on protrusions 614 and a mark 605 located outside of the fixed ring 60, associated with the icons 616, allows to visually determine whether the crown 61 is in the locked or unlocked position.

Unlocking can be entirely automatic once the bar is attached, on one hand, to the towing vehicle and, on the other hand, to the towed vehicle (or the trailer). Indeed, it is just necessary to provide a camera on the vehicle allowing to remotely recognise the position of the crown. As previously described, the crown 61 automatically adopts its locked position when the telescopic rod reaches its maximum extension. The camera allows to recognise this locking without exiting the vehicle. Locking is reliable and the visualization of the locked position of the crown ensures that locking is effective.

Of course, the particular embodiment described is for indicative and non-limiting purposes, and modifications can be made without departing from the scope of the present invention.

## Claims

1. A locking device (1) for a telescopic tow bar (2), which tow bar (2) comprises a cylindrical rod (4) slidably mounted in a cylindrical tube (3), the locking device (1) comprising a first locking part (5) carried or intended to be carried by the rod (4) and a second locking part (6) carried or intended to be carried by the tube (3), the first and second locking parts (5, 6) being able to cooperate with each other to prevent any relative axial translation movement between the tube (3) and the rod (4) when the rod (4) is in a maximum extension position out of the tube (3), the locking device (1) being **characterised in that**:
- the first locking part (5) has a radially outer side which is provided with first and second series of first tabs (51) located along first and second circumferences of the first locking part (5), respectively, two successive first tabs (51) of a same series being separated by a slot (52), the first and second series of first tabs (51) being separated, in the axial direction, by a circumferential groove (53), and
- the second locking part (6) comprises:
- a crown (61) having a radially inner side which is provided with a series of second tabs (610) located along a circumference of the crown (61), two successive second tabs (610) of a same series being separated by a slot (611), the second tabs (610) having a length, in the axial direction, at most equal to the width of the groove (53) of the first locking part (5), and
- mounting means for mounting the crown (61) on the tube (3) in a rotating manner between a first, so-called locked, angular position and a second, so-called unlocked, angular position,
the first and second locking parts (5, 6) being sized such that the crown (61) is able, in use, to be positioned around the first locking part (5) with the second tabs (610) of the crown (61) extending in said groove (53) and, according to the angular position of the crown (61), either each second tab (610) is located between two first tabs (51) of the first locking part (5), the locking device (1) being then in locked position, or each second tab (610) is located between two slots (52) of the first locking part (5), the locking device (1) being then in unlocked position;
the locking device (1) also comprising rotation blocking means for blocking against rotation the first locking part (5) with respect to the mounting means of the second locking part (6) when the crown (61) is positioned around the first locking part (5) with the second tabs (610) of the crown (61) extending in said groove (53), the rotation blocking means comprising a series of third tabs (603) located along a circumference of a radially inner side of the mounting means of the second locking part (6), two successive third tabs (603) being separated by a slot (604), the third tabs (603) being identical in number to the second tabs (610) of the crown (61) and having the same width, in the circumferential direction, whereby, when the crown (61) is positioned around the first locking part (5) with the second tabs (610) of the crown (61) extending in said groove (53), each first tab (51) of the second series is located in a slot (604) between two third tabs (603), the first tabs (51) of the second series thus forming also part of the rotation blocking means.

2. The locking device (1) according to claim 1, **characterised in that** the first tabs (51), the second tabs (610) and, if applicable, the third tabs (603), are angularly evenly distributed.

3. The locking device (1) according to one of claims 1 and 2, **characterised in that** the mounting means of the second locking part (6) comprise a so-called fixed ring (60) intended to be made integral with one end of a tube (3) of a tow bar (2), the fixed ring (60) having a radially inner side on which, if applicable, the third tabs (603) are located.

4. The locking device (1) according to claim 3, **characterised in that** the mounting means of the second locking part (6) also comprise an annular holding end cover (62), the crown (61) being arranged between the fixed ring (60) and the holding end cover (61), the holding end cover (62) being connected to the fixed ring (60) using screws (7) extending in holes provided for that purpose and angularly distributed in the fixed ring (60) and the holding end cover (62), each screw (7) further extending through a respective axial through opening (613) provided in the crown (61), the openings (613) being oblong and circle arc-shaped so as to allow the crown (61) to rotate.

5. The locking device (1) according to one of claims 1-4, **characterised in that** it comprises means for restraining the amplitude of rotation of the crown (61), which, if applicable, may be formed by the screws (7) connecting the holding end cover (62) and the fixed ring (60) and against which the ends of the openings (613) of the crown (61) can abut.

6. The locking device (1) according to one of claims 1-5, **characterised in that** it further comprises elastic return means for elastically urging the crown (61) towards the locked position.

7. The locking device (1) according to one of claims 1-6, **characterised in that** the crown (61) carries, on its outer surface, protrusions (614) which are angularly distributed and assist the manual control of the rotation of the crown (61), towards the unlocked position, by a user.

8. A telescopic tow bar (2) comprising a cylindrical rod (4) slidably mounted in a cylindrical tube (3), each of the tube (3) and the rod (4) being provided, at a first end, with joining means for joining to a vehicle, such as a towing clevis, the tow bar (2) also comprising a locking device (1) having a first locking part (5) carried by the rod (4) and a second locking part (6) carried by the tube (3), the first and second locking parts (5, 6) being able to cooperate with each other to prevent any relative axial translation movement between the tube (3) and the rod (4) when the rod (4) is in a maximum extension position out of the tube (3), the tow bar (2) being **characterised in that** the locking device (1) is as defined in any of claims 1-7.

9. The telescopic tow bar (2) according to claim 8, **characterised in that** it comprises holding means for holding the locking device (1) in the unlocked position until the rod (4) reaches its maximum extension position, these holding means comprising, preferably, a bar (41) which is carried on the outer surface of the rod (4), extends on a generatrix of the rod (4) and ends at a first tab (51) of the first series of tabs (51) of the first locking part (5) and, if applicable, a notch (620) which is provided on the radially inner side of the holding end cover (62) and positioned so as to be aligned with one of the slots (611) of the crown (61) when the crown (61) is in unlocked position, such that, during the extension or retraction movement of the rod (4) with respect to the tube (3), the bar (41) moves in a slot (611) of the crown (61) and, if applicable, in the notch (620) and a slot (604) between two third tabs (603), the bar (41) thus preventing any rotation of the crown (61) until the rod (4) reaches its maximum extension position.

## Patentansprüche

1. Verriegelungsvorrichtung (1) für eine teleskopische Anhängevorrichtung (2), wobei die Anhängevorrichtung (2) eine zylindrische Stange (4) umfasst, die verschiebbar in einem zylindrischen Rohr (3) montiert ist, wobei die Verriegelungsvorrichtung (1) ein erstes Verriegelungsteil (5), das von der Stange (4) getragen wird oder getragen werden soll, und ein zweites Verriegelungsteil (6) umfasst, das vom Rohr (3) getragen wird oder getragen werden soll, wobei das erste und das zweite Verriegelungsteil (5, 6) miteinander zusammenwirken können, um jegliche relative axiale Translationsbewegung zwischen dem Rohr (3) und der Stange (4) zu verhindern, wenn die Stange (4) in einer maximalen Ausfahrposition aus dem Rohr (3) ist, wobei die Verriegelungsvorrichtung (1) **dadurch gekennzeichnet ist, dass**:
- das erste Verriegelungsteil (5) eine radial äußere Seite aufweist, die mit einer ersten und einer zweiten Reihe von ersten Erhebungen (51) versehen ist, die entlang eines ersten bzw. eines zweiten Umfangs des ersten Verriegelungsteils (5) angeordnet sind, wobei zwei aufeinanderfolgende erste Erhebungen (51) einer gleichen Reihe durch eine Vertiefung (52) getrennt sind, wobei die erste und die zweite Reihe von Erhebungen (51) in der axialen Richtung durch eine Umfangsnut (53) getrennt sind, und
- das zweite Verriegelungsteil (6) umfasst:
- einen Kranz (61) mit einer radial inneren Seite, die mit einer Reihe von zweiten Erhebungen (610) versehen ist, die entlang eines Umfangs des Kranzes (61) angeordnet ist, wobei zwei aufeinanderfolgende zweite Erhebungen (610) einer gleichen Reihe durch eine Vertiefung (611) getrennt sind, wobei die zweiten Erhebungen (610) eine Länge in der axialen Richtung aufweisen, die höchstens gleich der Breite der Nut (53) des ersten Verriegelungsteils (5) ist, und
- Befestigungsmittel zum drehbaren Befestigen des Kranzes (61) zwischen einer ersten, sogenannten verriegelten Winkelposition und einer zweiten, sogenannten entriegelten Winkelposition am Rohr (3),
wobei das erste und das zweite Verriegelungsteil (5, 6) derart bemessen sind, dass der Kranz (61) in Verwendung mit den sich in die Nut (53) erstreckenden zweiten Erhebungen (610) des Kranzes (61) um das erste Verriegelungsteil (5) positioniert werden kann, und gemäß der Winkelposition des Kranzes (61) entweder jede zweite Erhebung (610) zwischen zwei ersten Erhebungen (51) des Verriegelungsteils (5) angeordnet wird, wobei die Verriegelungsvorrichtung (1) dann in einer verriegelten Position ist, oder jede zweite Erhebung (610) zwischen zwei Vertiefungen (52) des ersten Verriegelungsteils (5) angeordnet wird, wobei die Verriegelungsvorrichtung (1) dann in einer entriegelten Position ist;
die Verriegelungsvorrichtung (1) außerdem Drehblockiermittel zum Blockieren von Drehung des ersten Verriegelungsteils (5) in Bezug auf die Befestigungsmittel des zweiten Verriegelungsteils (6) umfasst, wenn der Kranz (61) mit den sich in die Nut (53) erstreckenden zweiten Erhebungen (610) des Kranzes (61) um das erste Verriegelungsteil (5) positioniert wird, wobei die Drehblockiermittel eine Reihe von dritten Erhebungen (603) umfassen, die entlang eines Umfangs einer radial inneren Seite der Befestigungsmittel des zweiten Verriegelungsteils (6) angeordnet ist, wobei zwei aufeinanderfolgende dritte Erhebungen (603) durch eine Vertiefung (604) getrennt sind, wobei die dritten Erhebungen (603) identisch an der Zahl mit den zweiten Erhebungen (610) des Kranzes (61) sind und die gleiche Breite in der Umfangsrichtung aufweisen, wodurch, wenn der Kranz (61) mit den sich in die Nut (53) erstreckenden zweiten Erhebungen (610) um das erste Verriegelungsteil (5) positioniert wird, jeder erste Erhebung (51) der zweiten Reihe in einer Vertiefung (604) zwischen zwei dritten Erhebungen (603) angeordnet wird, so dass die ersten Erhebungen (51) der zweiten Reihe auch einen Teil der Drehblockiermittel bilden.

2. Verriegelungsvorrichtung (1) nach Anspruch 1, **dadurch gekennzeichnet, dass** die ersten Erhebungen (51), die zweiten Erhebungen (610) und gegebenenfalls die dritten Erhebungen (603) winkelmäßig gleichmäßig verteilt sind.

3. Verriegelungsvorrichtung nach einem der Ansprüche 1 und 2, **dadurch gekennzeichnet, dass** die Befestigungsmittel des zweiten Verriegelungsteils (6) einen sogenannten festen Ring (60) umfassen, der mit einem Ende eines Rohres (3) einer Anhängevorrichtung (2) einstückig ausgebildet sein soll, wobei der feste Ring (60) ein radial innere Seite aufweist, auf welcher gegebenenfalls die dritten Erhebungen (603) angeordnet sind.

4. Verriegelungsvorrichtung (1) nach Anspruch 3, **dadurch gekennzeichnet, dass** die Befestigungsmittel des zweiten Verriegelungsteils (6) außerdem eine ringförmige haltende Endabdeckung (62) umfassen, wobei der Kranz (61) zwischen dem festen Ring (60) und der haltenden Endabdeckung (62) angeordnet ist, die haltende Endabdeckung (62) unter Verwendung von Schrauben (7), die sich in Löcher erstrecken, die für diesen Zweck vorgesehen und im festen Ring (60) und der haltenden Endabdeckung (62) winkelig verteilt sind, mit dem festen Ring (60) verbunden wird, und jede Schraube (7) sich ferner durch eine jeweilige axiale Durchgangsöffnung (613) erstreckt, die im Kranz (61) vorgesehen ist, wobei die Öffnungen (613) länglich und kreisbogenförmig sind, um Drehung des Kranzes (61) zu erlauben.

5. Verriegelungsvorrichtung (1) nach einem der Ansprüche 1 bis 4, **dadurch gekennzeichnet, dass** sie Mittel zum Beschränken der Drehamplitude des Kranzes (61) umfasst, die gegebenenfalls durch die Schrauben (7) gebildet werden können, welche die haltende Endabdeckung (62) und den festen Ring (60) verbinden, und an welchen die Enden der Öffnungen (613) des Kranzes (61) anliegen können.

6. Verriegelungsvorrichtung (1) nach einem der Ansprüche 1 bis 5, **dadurch gekennzeichnet, dass** sie ferner elastische Rückstellmittel zum elastischen Drücken des Kranzes (61) in die verriegelte Position umfasst.

7. Verriegelungsvorrichtung (1) nach einem der Ansprüche 1 bis 6, **dadurch gekennzeichnet, dass** der Kranz (61) auf seiner Außenfläche Vorsprünge (614) trägt, die winkelig verteilt sind und die manuelle Steuerung der Drehung des Kranzes (61) in Richtung der entriegelten Position durch einen Benutzer unterstützen.

8. Teleskopische Anhängevorrichtung (2), umfassend eine zylindrische Stange (4), die verschiebbar in einem zylindrischen Rohr (3) montiert ist, wobei jedes von dem Rohr (3) und der Stange (4) an einem ersten Ende mit Verbindungsmitteln zur Verbindung mit einem Fahrzeug, wie beispielsweise Zughaken, versehen ist, wobei die Anhängevorrichtung (2) außerdem eine Verriegelungsvorrichtung (1) mit einem ersten Verriegelungsteil (5), das von der Stange (4) getragen wird, und einem zweitem Verriegelungsteil (6) umfasst, das vom Rohr (3) getragen wird, wobei das erste und das zweite Verriegelungsteil (5, 6) miteinander zusammenwirken können, um jegliche relative axiale Translationsbewegung zwischen dem Rohr (3) und der Stange (4) zu verhindern, wenn die Stange (4) in einer maximalen Ausfahrposition aus dem Rohr (3) ist, wobei die Anhängevorrichtung (2) **dadurch gekennzeichnet ist, dass** die Verrieglungsvorrichtung (1) so ist, wie in einem der Ansprüche 1 bis 7 definiert.

9. Teleskopische Anhängevorrichtung (2) nach Anspruch 8, **dadurch gekennzeichnet, dass** sie Haltemittel zum Halten der Verriegelungsvorrichtung (1) in der entriegelten Position umfasst, bis die Stange (4) ihre maximale Ausfahrposition erreicht, wobei diese Haltemittel vorzugsweise einen Balken (41), der auf der Außenfläche der Stange (4) getragen wird, sich auf einer Generatrix der Stange (4) ausdehnt und an einer ersten Erhebung (51) der ersten Reihe von Erhebungen (51) des ersten Verriegelungsteils (5) endet, und gegebenenfalls eine Kerbe (620) umfassen, die auf einer radial inneren Seite der haltenden Endabdeckung (62) vorgesehen und positioniert ist, um mit einer der Vertiefungen (611) des Kranzes (61) ausgerichtet zu werden, wenn der Kranz (61) in der entriegelten Position ist, derart dass während der Ausfahr-oder Einfahrbewegung der Stange (4) in Bezug auf das Rohr (3) der Balken (41) sich in eine Vertiefung (611) des Kranzes (61) und gegebenenfalls in die Kerbe (620) und eine Vertiefung (604) zwischen zwei dritten Erhebungen (603) bewegt, so dass der Balken (41) jegliche Drehung des Kranzes (61) verhindert, bis die Stange (4) ihre maximale Ausfahrposition erreicht.

## Revendications

1. Dispositif de verrouillage (1) pour une barre de remorquage (2) télescopique, laquelle barre de remorquage (2) comprend une tige (4) cylindrique montée coulissante dans un tube (3) cylindrique, le dispositif de verrouillage (1) comprenant une première partie de verrouillage (5) portée ou destinée à être portée par la tige (4) et une seconde partie de verrouillage (6) portée ou destinée à être portée par le tube (3), les première et seconde parties de verrouillage (5, 6) étant aptes à coopérer l'une avec l'autre pour interdire tout mouvement relatif en translation axiale entre le tube (3) et la tige (4) lorsque la tige (4) est dans une position d'extension maximale hors du tube (3), le dispositif de verrouillage (1) étant **caractérisé par le fait que** :
- la première partie de verrouillage (5) présente un côté radialement extérieur qui comporte des première et seconde séries de premières languettes (51) situées le long respectivement d'une première et d'une seconde circonférence de la première partie de verrouillage (5), deux premières languettes (51) successives d'une même série étant séparées par un créneau (52), les première et seconde séries de premières languettes (51) étant séparées, dans la direction axiale, par une gorge (53) circonférentielle, et
- la seconde partie de verrouillage (6) comprend :
- une couronne (61) présentant un côté radialement intérieur qui comporte une série de deuxièmes languettes (610) situées le long d'une circonférence de la couronne (61), deux deuxièmes languettes (610) successives d'une même série étant séparées par un créneau (611), les deuxièmes languettes (610) ayant une longueur, dans la direction axiale, au plus égale à la largeur de la gorge (53) de la première partie de verrouillage (5), et
- des moyens de montage pour monter la couronne (61) sur le tube (3) à rotation entre une première position angulaire dite verrouillée et une seconde position angulaire dite déverrouillée,
les première et seconde parties de verrouillage (5, 6) étant dimensionnées de telle sorte que la couronne (61) est apte, en utilisation, à être positionnée autour de la première partie de verrouillage (5) avec les deuxièmes languettes (610) de la couronne (61) s'étendant dans ladite gorge (53) et, en fonction de la position angulaire de la couronne (61), soit chaque deuxième languette (610) se trouve entre deux premières languettes (51) de la première partie de verrouillage (1), le dispositif de verrouillage (1) étant alors en position verrouillée, soit chaque deuxième languette (610) se trouve entre deux créneaux (52) de la première partie de verrouillage (1), le dispositif de verrouillage (1) étant alors en position déverrouillée ;
le dispositif de verrouillage (1) comprenant également des moyens de blocage en rotation pour bloquer en rotation la première partie de verrouillage (5) par rapport aux moyens de montage de la seconde partie de verrouillage (6) lorsque la couronne (61) est positionnée autour de la première partie de verrouillage (5) avec les deuxièmes languettes (610) de la couronne (61) s'étendant dans ladite gorge (53), les moyens de blocage en rotation comprenant une série de troisièmes languettes (603) situées le long d'une circonférence d'un côté radialement intérieur des moyens de montage de la seconde partie de verrouillage (6), deux troisièmes languettes (603) successives étant séparées par un créneau (604), les troisièmes languettes (603) étant en même nombre que les deuxièmes languettes (610) de la couronne (61) et ayant la même largeur, dans la direction circonférentielle, ce par quoi, lorsque la couronne (61) est positionnée autour de la première partie de verrouillage (5) avec les deuxièmes languettes (610) de la couronne (61) s'étendant dans ladite gorge (53), chaque première languette (51) de la seconde série se trouve dans un créneau (604) entre deux troisièmes languettes (603), les premières languettes (51) de la seconde série faisant ainsi également partie des moyens de blocage en rotation.

2. Dispositif de verrouillage (1) selon la revendication 1, **caractérisé par le fait que** les premières languettes (51), les deuxièmes languettes (610) et, le cas échéant, les troisièmes languettes (603), sont régulièrement réparties angulairement.

3. Dispositif de verrouillage (1) selon l'une quelconque des revendications 1 et 2, **caractérisé par le fait que** les moyens de montage de la seconde partie de verrouillage (6) comprennent une bague dite fixe (60) destinée à être rendue solidaire d'une extrémité d'un tube (3) de barre de remorquage (2), la bague fixe (60) présentant un côté radialement intérieur sur lequel sont situées, le cas échéant, les troisièmes languettes (603).

4. Dispositif de verrouillage (1) selon la revendication 3, **caractérisé par le fait que** les moyens de montage de la seconde partie de verrouillage (6) comprennent également un flasque annulaire de maintien (62), la couronne (61) étant disposée entre la bague fixe (60) et le flasque de maintien (61), le flasque de maintien (62) étant lié à la bague fixe (60) par des vis (7) s'étendant dans des trous prévus à cet effet et répartis angulairement dans la bague fixe (60) et le flasque de maintien (62), chaque vis (7) s'étendant en outre à travers une lumière traversante axiale (613) respective ménagée dans la couronne (61), les lumières (613) étant oblongues et en arc de cercle de façon à autoriser une rotation de la couronne (61).

5. Dispositif de verrouillage (1) selon l'une quelconque des revendications 1 à 4, **caractérisé par le fait qu'**il comprend des moyens de limitation de l'amplitude de rotation de la couronne (61), le cas échéant qui peuvent être formés par les vis (7) reliant le flasque de maintien (62) et la bague fixe (60) et contre lesquelles les extrémités des lumières (613) de la couronne (61) peuvent venir en butée.

6. Dispositif de verrouillage selon l'une quelconque des revendications 1 à 5, **caractérisé par le fait qu'**il comprend en outre des moyens de rappel élastique de la couronne (61) vers la position verrouillée.

7. Dispositif de verrouillage selon l'une quelconque des revendications 1 à 6, **caractérisé par le fait que** la couronne (61) porte sur sa surface externe des saillies (614) réparties angulairement et facilitant la commande manuelle de la rotation de la couronne (61), vers la position déverrouillée, par un utilisateur.

8. Barre de remorquage (2) télescopique comprenant une tige (4) cylindrique montée coulissante dans un tube (3) cylindrique, chacun du tube (3) et de la tige (4) étant muni, à une première extrémité, de moyens de liaison à un véhicule, tels qu'une chape de remorquage, la barre de remorquage (2) comprenant également un dispositif de verrouillage (1) comprenant une première partie de verrouillage (5) portée par la tige (4) et une seconde partie de verrouillage (6) portée par le tube (3), les première et seconde parties de verrouillage (5, 6) étant aptes à coopérer l'une avec l'autre pour interdire tout mouvement relatif en translation axiale entre le tube (3) et la tige (4) lorsque cette dernière est dans une position d'extension maximale hors du tube (3), la barre de remorquage (2) étant **caractérisée par le fait que** le dispositif de verrouillage (1) est tel que défini à l'une quelconque des revendications 1 à 7.

9. Barre de remorquage (2) télescopique selon la revendication 8, **caractérisée par le fait qu'**elle comprend des moyens de maintien pour maintenir le dispositif de verrouillage (1) dans la position déverrouillée tant que la tige (4) n'a pas atteint sa position d'extension maximale, ces moyens de maintien comprenant, de préférence, une barrette (41) qui est portée sur la surface extérieure de la tige (4), s'étend sur une génératrice de la tige (4) et se termine au niveau d'une première languette (51) de la première série de languettes (51) de la première partie de verrouillage (5), et, le cas échéant, une encoche (620) qui est ménagée dans le côté radialement intérieur du flasque de maintien (62) et positionnée de façon à être alignée avec l'un des créneaux (611) de la couronne (61) lorsque cette dernière est en position déverrouillée, de telle sorte que lors du mouvement d'extension ou de rétractation de la tige (4) par rapport au tube (3), la barrette (41) circule dans un créneau (611) de la couronne (61) et, le cas échéant, dans l'encoche (620) et un créneau (604) entre deux troisièmes languettes (603), la barrette (41) s'opposant ainsi à toute rotation de la couronne (61) tant que la tige (4) n'a pas atteint sa position d'extension maximale.
